# EUROPEAN PATENT SPECIFICATION

(11) **EP 4 195 394 B1**
(45) Date of publication and mention of the grant of the patent: **21.10.2026**
(21) Application number: 22742759.8
(22) Date of filing: 11.01.2022
(51) Int. Cl.: H01M 50/383, H01M 50/30, H01M 50/358, H01M 50/24, H01M 50/251, H01M 50/249, H01M 10/42, H01M 50/222, H01M 50/231, H01M 50/507, H01M 50/211, H01M 50/271, H01M 50/342

(54) **BATTERY PACK**
BATTERIEPACK
BLOC-BATTERIE

(30) Priority: 21.01.2021 KR 20210008927
(43) Date of publication of application: 14.06.2023
(73) Proprietor: LG Energy Solution, Ltd., Seoul 07335 (KR)
(72) Inventor: JO, Sang-Hyun, Daejeon 34122 (KR); KONG,Yu-Dam, Daejeon 34122 (KR); KIM, Seung-Hyun, Daejeon 34122 (KR); SHIN, Jin-Kyu, Daejeon 34122 (KR); OH, Young-Hoo, Daejeon 34122 (KR); OK, Seung-Min, Daejeon 34122 (KR); HONG, Sung-Goen, Daejeon 34122 (KR)
(74) Representative: Hoffmann Eitle
(86) International application number: PCT/KR2022/000497
(87) International publication number: WO 2022/158783

(56) References cited:
- WO-A1-2020/039722
- WO-A1-2020/059298
- CN-U- 211 670 261
- JP-B2- 6 296 362
- KR-A- 20120 119 406
- KR-A- 20180 088 467
- KR-A- 20210 004 189
- KR-B1- 102 201 278
- US-A1- 2018 175 467
- US-A1- 2019 157 636
- US-A1- 2021 313 650

## Description

### TECHNICAL FIELD

The present disclosure relates to a battery pack, and an energy storage system (ESS) and a vehicle including the same. More particularly, the present disclosure relates to a battery pack having a structure capable of, when venting of a battery cell occurs, discharging gas to the outside, preventing a spark containing high-temperature electrode active material and metal particles from leaking to the outside of the battery pack, and preventing oxygen from being introduced into the battery pack to prevent a fire in the battery pack, and an energy storage system (ESS) and a vehicle including the battery pack.

### BACKGROUND ART

A battery pack applied to an energy storage system (ESS) and/or an electric vehicle may be manufactured to include a plurality of battery modules to which high-power and high-capacity lithium secondary batteries are applied. In order to satisfy the output power characteristics of a battery pack required by an ESS and/or an electric vehicle and realize high capacity, the number of lithium secondary batteries included in one battery module may be increased, and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature rise and internal gas generation of a lithium secondary battery in a battery module. When a temperature of a lithium secondary battery abnormally rises and internal gas is generated, and thus internal pressure of the lithium secondary battery increases to a certain level or higher, venting of the lithium secondary battery occurs, and thus, high-temperature gas is ejected to the outside of the lithium secondary battery, and a high-temperature spark containing electrode active material and aluminum particles is ejected.

In order to prevent an increase in internal pressure of a battery pack, venting gas ejected during venting of a lithium secondary battery should be able to be rapidly discharged to the outside of the battery pack. However, when a high-temperature spark is discharged along with the venting gas to the outside of the battery pack, the venting gas, the high-temperature spark, and oxygen may meet to cause a fire. Also, although oxygen hardly exists in the battery pack due to pressure of the venting gas at an initial stage of the venting, when discharge pressure of the venting gas is less than a certain level, oxygen may be introduced into the battery pack, and in this case, a fire may occur even in the battery pack.

Accordingly, there is a demand to develop a battery pack having a structure capable of, even when thermal runaway occurs due to abnormality such as a short-circuit in a battery cell, rapidly discharging venting gas to the outside of the battery pack, effectively preventing a high-temperature spark containing electrode active material and aluminum particles from leaking to the outside, and rapidly preventing the inflow of oxygen into the battery pack to prevent a fire in the battery pack.

WO 2020/039722 A1 concerns a battery module. The battery module includes a plurality of batteries. Further, the battery module includes a cooling path for cooling and guiding the gas ejected from an exhaust valve to the outside of battery module. The cooling path may be formed at a side of a group of batteries inside the module case. A filter, for example a wire mesh, is installed to cover an outlet of the cooling path.

US 2019/157636 A1 concerns a high-density battery pack. A pack vent may contain a screen, filter, or other separation member to retain certain components of discharged matter within the battery pack.

CN 211 670 261 U concerns a busbar insulation structure. A busbar is installed on a flame-retardant insulation film.

KR 2018 0088467 A concerns a lithium ion battery. A mesh, which is positioned on an exhaust side, may be provided to act as flame retarder.

### DISCLOSURE

### Technical Problem

The present disclosure is designed to solve the problems of the related art, and therefore the present disclosure is directed to providing a battery pack having a structure capable of, when an internal event occurs, rapidly discharging venting gas, effectively preventing a high-temperature spark from leaking to the outside, and after the venting gas is discharged, preventing external air from being introduced into the battery pack.

The present disclosure is also directed to providing a battery pack having a structure capable of, even when some structures of a battery module are damaged due to high-temperature gas and sparks, preventing external oxygen from being easily introduced into the battery pack and preventing a short circuit between adjacent lithium secondary batteries.

However, the technical purpose to be solved by the present disclosure is not limited to the above, and other objects not mentioned herein will be clearly understood by one of ordinary skill in the art from the following disclosure.

### Technical Solution

A battery pack according to an embodiment of the present invention is defined in claim 1 and includes: a sub-pack including a plurality of battery modules that are located adjacent to one another in a longitudinal direction of the battery pack; a duct coupled to a side of the sub-pack in a width direction of the sub-pack that is perpendicular to the longitudinal direction of the battery pack; and a duct cover covering a duct opening portion formed on a side of the duct in a longitudinal direction of the duct, the duct cover including a filter having a mesh structure. The duct is spaced apart from a module opening portion formed on a side of the battery module in a longitudinal direction of the battery module, to form a pack passage between the battery module and the duct. The filter has filtration performance ranging from one wire every 1.27mm (20 meshes) to one wire every 0.25mm (100 meshes).

From among venting gas and a spark discharged from the battery module, the filter may filter out electrode active material particles and metal particles contained in the spark.

The battery module may include: a cell stack in which a plurality of battery cells are vertically stacked; a module housing in which the cell stack is accommodated; and a bus bar frame assembly covering a module opening portion formed on a side of the module housing in a longitudinal direction of the module housing.

The module housing may include: a base plate supporting the cell stack; and a pair of side plates covering both side portions of the cell stack.

Each of the pair of side plates may include a spark direction changing portion formed by bending an end portion of the side plate in a longitudinal direction of the side plate toward the cell stack.

The battery module may further include a fire-proof sheet located between the bus bar frame assembly and the cell stack and including a plurality of sheet slits through which an electrode lead of the battery cell passes. The fire-proof sheet may be a mica sheet.

The battery module may further include a sheet cover including a plurality of cover slits through which the electrode lead of the battery cell passes and covering the fire-proof sheet.

The sheet cover may completely cover the mica sheet so that the mica sheet is not exposed to external air.

Each of the plurality of cover slits may have a shape whose width decreases toward the bus bar frame assembly.

An energy storage system (ESS) according to an embodiment of the present invention is defined in claim 10 and includes the above battery pack.

A vehicle according to an embodiment of the present invention is defined in claim 11 and includes the above battery pack.

### Advantageous Effects

According to an aspect of the present disclosure, when an internal event occurs in a battery pack, venting gas may be rapidly discharged, a high-temperature spark may be effectively prevented from leaking to the outside, and after the venting gas is discharged, external air may be prevented from being introduced into a battery module.

According to another aspect of the present disclosure, even when some structures of a battery module are damaged due to high-temperature gas and sparks, external oxygen may be prevented from being easily introduced into the battery module and a short circuit between adjacent lithium secondary batteries may be prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery pack according to an embodiment of the present disclosure.
FIG. 2 is a view illustrating a state where a duct cover assembled on a side is removed from the battery pack of FIG. 1.
FIG. 3 is a view illustrating a pack passage formed in a battery pack according to an embodiment of the present disclosure.
FIG. 4 is a partial cross-sectional view illustrating a battery pack according to an embodiment of the present disclosure, for describing a movement path of venting gas and a spark.
FIGS. 5 and 6 are views illustrating a battery module according to the present disclosure.
FIG. 7 is a view for describing a movement path of venting gas and a spark in a battery module according to the present disclosure.
FIG. 8 is a partial cross-sectional view illustrating a battery module according to the present disclosure.
FIG. 9 is a view illustrating a state where a bus bar frame assembly and a fire-proof sheet assembly are coupled to a module housing according to the present disclosure.
FIG. 10 is an exploded perspective view illustrating a part of a module housing, a bus bar frame assembly, and a fire-proof sheet assembly according to the present disclosure.
FIG. 11 is a view illustrating a fire-proof sheet assembly according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto within the scope of the appended claims.

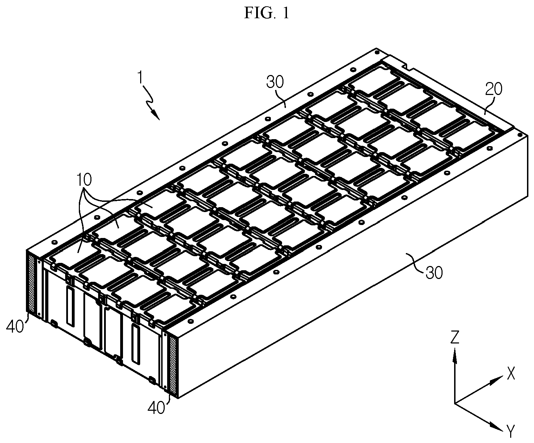

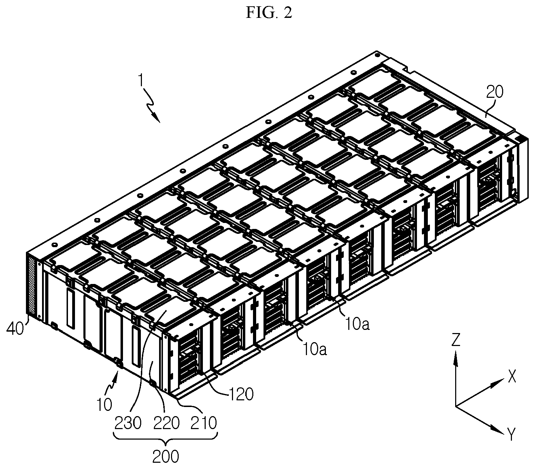

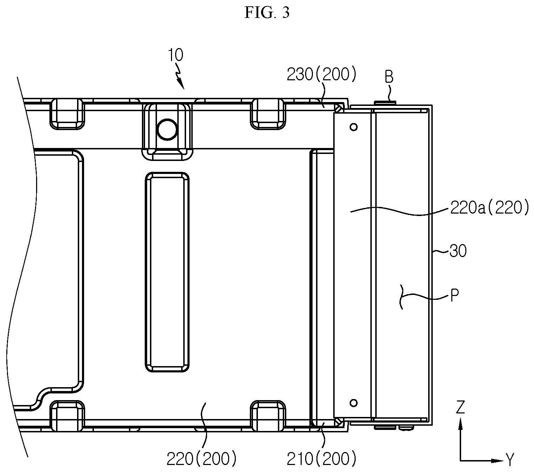

Referring to FIGS. 1 through 4, a battery pack 1 according to an embodiment of the present disclosure includes a sub-pack including a plurality of battery modules 10, a duct 30 coupled to a side or both sides of the sub-pack in a width direction (direction parallel to a Y-axis) of the sub-pack, and a duct cover 40 covering a duct opening portion formed in the duct.

The sub-pack includes the plurality of battery modules 10 that are located adjacent to one another in a longitudinal direction (direction parallel to an X-axis) of the battery pack 1. The sub-pack may further include a battery management system (BMS) assembly 20 coupled to a side of a module assembly, which is formed by coupling the plurality of battery modules 10, in a longitudinal direction (direction parallel to the X-axis) of the module assembly.

The battery module 10 includes a cell stack including a plurality of battery cells 100 that are vertically stacked, and a module housing 200 in which the cell stack is accommodated. The battery cell 100 may be, for example, a pouch-type battery cell. The module housing 200 includes a base plate 210 supporting the cell stack, a side plate 220 covering both side portions of the cell stack, and a top plate 230 covering an upper portion of the cell stack.

The battery module 10 includes a module opening portion 10a formed on a side of the battery module 10 in a longitudinal direction (direction parallel to a Y-axis) of the battery module 10. The module opening portion 10a may also be formed on the other side of the battery module 10 in the longitudinal direction (direction parallel to the Y-axis) of the battery module 10.

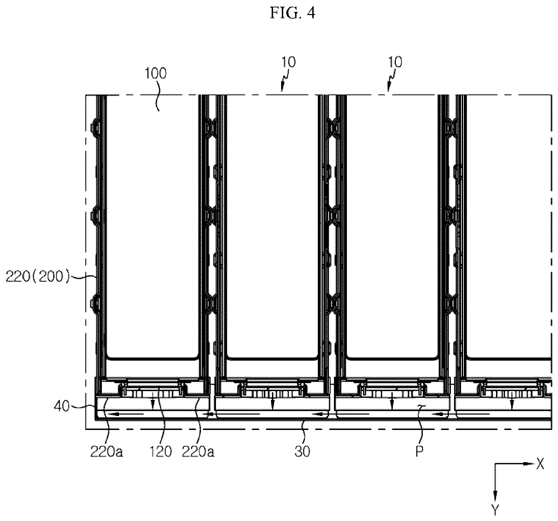

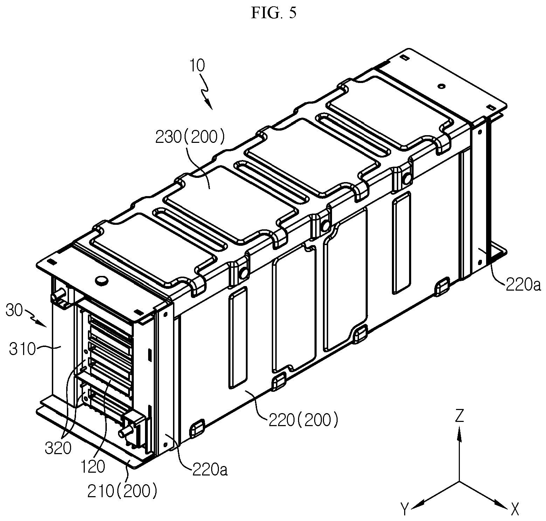

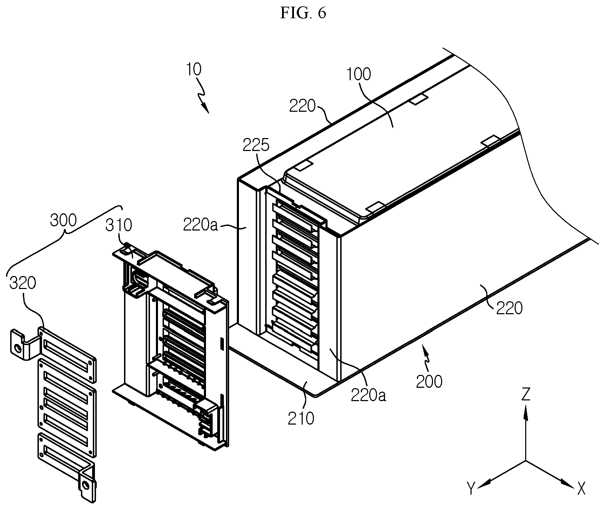

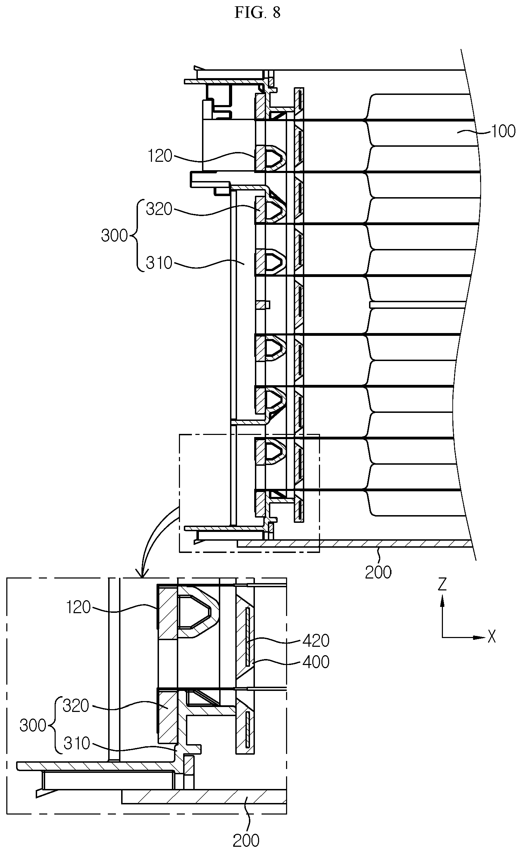

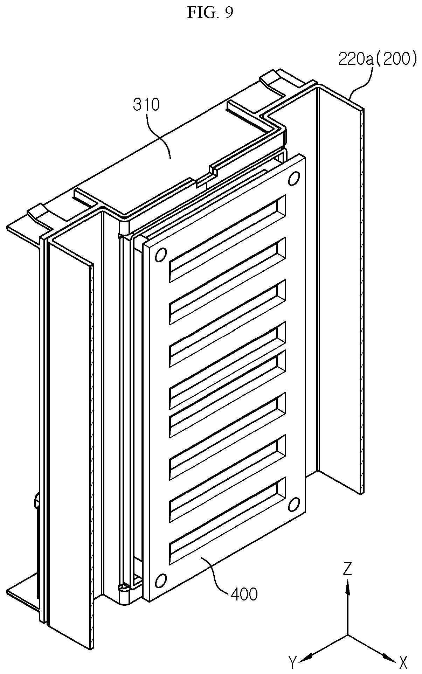

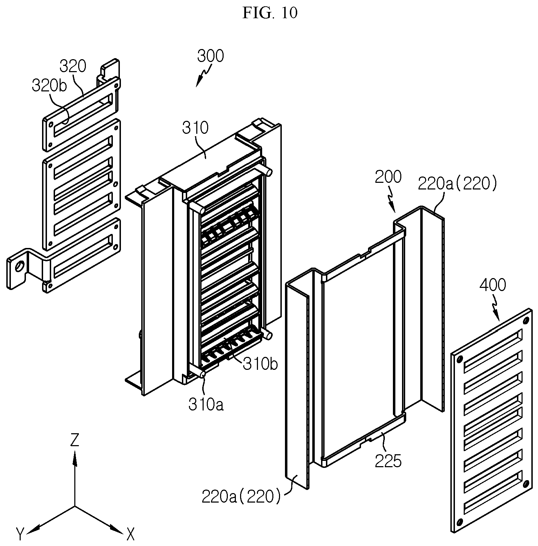

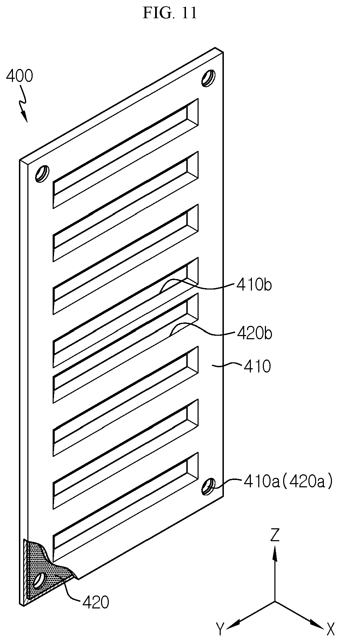

Venting gas generated in the battery module 10 is discharged in an arrow direction of FIG. 4 through the module opening portion 10a. A structure of the battery module 10 will be described below in detail with reference to FIGS. 5 through 11.

The BMS assembly 20 may be coupled to a side of the module assembly including the plurality of battery modules 10, which are located adjacent to one another, in the longitudinal direction (direction parallel to the X-axis) of the module assembly. Although not shown in the drawings, the BMS assembly includes at least one battery management system (BMS) for controlling charging/discharging of the plurality of battery modules 10. The BMS assembly may further include a BMS frame coupled to the BMS. The BMS frame may be fastened to the module assembly and/or the duct 30.

The duct 30 extends in a direction parallel to a coupling direction (direction parallel to the X-axis) of the battery module 10. The duct 30 may have a length corresponding to a length of the module assembly. The duct 30 may be fastened to the module housing 200 by a fastening member such as a bolt B.

Although the duct 30 is fastened to the base plate 210 and the top plate 230 of the module housing 200 in the drawings of the present disclosure, the present disclosure is not limited thereto. That is, the duct 30 may be fastened to the base plate 210 and/or the top plate 230 and/or the side plate 220 of the module housing 200.

The duct 30 is spaced apart from the module opening portion 10a formed on a side or both sides of the battery module 10 in the longitudinal direction (direction parallel to the Y-axis) of the battery module 10 to form a pack passage P between the battery module 10 and the duct 30. The duct 30 includes the duct opening portion formed on a side or both sides of the duct 30 in a longitudinal direction (direction parallel to the X-axis) of the duct 30. The duct opening portion communicates with the pack passage P. Accordingly, venting gas discharged to the outside of the battery module 10 along the module opening portion 10a formed in the battery module 10 moves to a side or both sides of the duct 30 in the longitudinal direction (direction parallel to the X-axis) of the duct 30 along the pack passage P and is discharged to the outside of the battery pack 1 through the duct opening portion (see an arrow direction of FIG. 4).

The duct cover 40 covers the duct opening portion formed on a side or both sides of the duct 30 in the longitudinal direction of the duct 30. The duct cover 40 includes a filter having a mesh structure. The filter has filtration performance ranging from about one wire every 1.27mm (20 meshes) to about one wire every 0.25mm (100 meshes). That is, a mesh that is a unit indicating the performance of a filter refers to the number of small squares included in a square of 25.4mm (1 inch) in width and 25.4mm (1 inch) in length. That is, 20 meshes means that 20 metal wires having a square shape are included in a square of 25.4mm (1 inch) in width and 25.4mm (1 inch) in length. Accordingly, the performance of the filter expressed in units of meshes increases as the value increases.

From among venting gas and a spark discharged from the battery module 10 during venting, the duct cover 40 passes the venting gas and filters out electrode active material particles and metal particles contained in the spark. That is, the numerical range of the filtration performance of the filter of the duct cover 40 corresponds to a numerical range in which the venting gas may be rapidly discharged but the electrode active material particles and metal particles such as aluminum particles contained in the spark may be filtered out.

When venting occurs in the battery module 10, a high-temperature spark containing electrode active material particles and metal materials such as aluminum may be discharged along with high-temperature gas in an arrow direction of FIG. 4. When the spark leaks to the outside of the battery pack 1, the high-temperature venting gas, the high-temperature spark, and a large amount of oxygen may meet to generate a large flame. Accordingly, the duct cover 40 to which the filter having the filtration performance in the numerical range is applied may rapidly reduce internal pressure of the battery module 10 and the battery pack 1 during venting and may prevent the generation of a flame.

Also, when a certain time elapses after the venting, the electrode active material particles and the metal particles filtered out by the filter of the duct cover 40 may block the filter, and thus, external oxygen may be prevented from being introduced into the battery pack 1.

Although oxygen is hardly introduced into the battery pack 1 due to ejection pressure of the venting gas at an initial stage of the venting and thus there is no risk of an internal fire, when the ejection pressure of the venting gas is lowered, external oxygen may be introduced. In this case, the high-temperature venting gas, the particles of the spark, and the oxygen may meet in the battery pack 1 to generate a flame. The duct cover 40 allows the venting gas to be rapidly discharged to the outside at an initial stage of the venting, and when a certain time elapses, is blocked by the electrode active material particles and the metal particles, to prevent the inflow of external oxygen and prevent the risk of a flame in the battery pack 1 as described above.

The battery module 10 will be described in more detail with reference to FIGS. 5 through 11.

Referring to FIGS. 5 through 8, the battery module 10 includes the cell stack in which the plurality of battery cells 100 are stacked in a vertical direction (direction parallel to a Z-axis), and the module housing 200 in which the cell stack is accommodated. The battery module 10 may further include a bus bar frame assembly 300 covering an opening portion formed on a side of the module housing 200 in a longitudinal direction (direction parallel to the Y-axis) of the module housing 200, and a fire-proof sheet assembly 400 located between the bus bar frame assembly 300 and the cell stack and coupled to the bus bar frame assembly 300.

The battery cell 100 may be a pouch-type battery cell. In this case, the battery cell 100 includes an electrode assembly (not shown), a pouch case 110 in which the electrode assembly is accommodated, and a pair of electrode leads 120 connected to the electrode assembly and drawn out of the pouch case 110. The pair of electrode leads 120 are drawn in opposite directions in a longitudinal direction (direction parallel to the Y-axis) of the battery cell 100.

The module housing 200 includes the base plate 210 supporting the cell stack, the pair of side plates 220 covering both side portions of the cell stack, and the top plate 230 covering an upper portion of the cell stack. Each of the pair of side plates 220 may include a spark direction changing portion 220a formed by bending an end portion of the side plate 220 in a longitudinal direction of the side plate 220 toward the cell stack.

The opening portion formed on a side of the module housing 200 in the longitudinal direction of the module housing 200 is formed between a pair of spark direction changing portions 220a respectively provided on the pair of side plates 220. The electrode lead 120 of the battery cell 100 may be exposed to the outside of the module housing 200 through the opening portion formed between the pair of spark direction changing portions 220a.

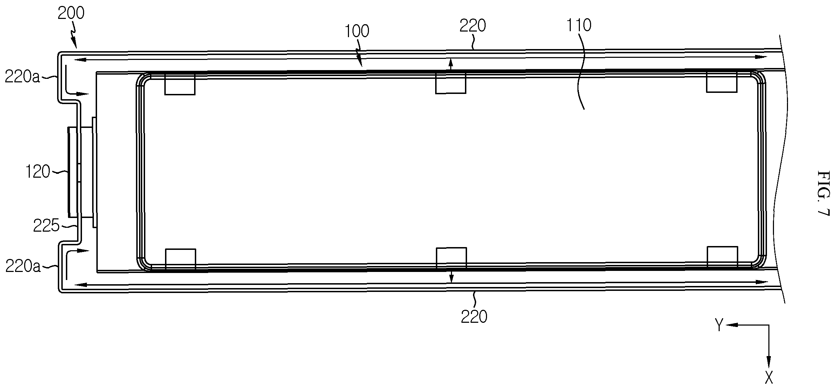

Because the battery module 10 of the present disclosure includes the spark direction changing portion 220a as described above, a high-temperature spark discharged during venting of the battery cell 100 is prevented from being ejected to the outside of the module housing 200 in the longitudinal direction (direction parallel to the Y-axis) of the module housing 200. That is, a high-temperature spark discharged through both side portions of the battery cell 100 of the cell stack in a width direction (direction parallel to the X-axis) during venting of the battery cell 100 moves toward an end portion and/or the other end portion of the battery module 10 in a longitudinal direction (direction parallel to the Y-axis) of the battery module 10 and then switches a moving direction toward the cell stack (see an arrow direction of FIG. 7).

The module housing 200 may further include a fastening frame 225 connecting one pair of spark direction changing portions 200a and having an empty central portion. The fastening frame 225 is located between the bus bar frame assembly 300 and the fire-proof sheet assembly 400. When the fastening frame 225 is provided, the bus bar frame assembly 300 and the fire-proof sheet assembly 400 may be closely attached to the fastening frame 225, and may be fastened to each other through the empty central portion of the fastening frame 225.

Although not shown, the opening portions of the module housing 200 of the present disclosure may be formed on both sides of the module housing 200 in the longitudinal direction of the module housing 200. In this case, the pair of spark direction changing portions 200a may also be provided on a side and the other side of the module housing 200 in the longitudinal direction of the module housing 200.

Referring to FIGS. 5 through 10, the bus bar frame assembly 300 includes a bus bar frame 310 and at least one bus bar 320. A pair of bus bar frame assemblies 300 may be provided, and in this case, the pair of bus bar frame assemblies 300 respectively cover the opening portion formed on a side and the opening portion formed on the other side of the module housing 200 in the longitudinal direction (direction parallel to the Y-axis) of the module housing 200.

The bus bar frame 310 covers the opening portion of the module housing 200 and includes a plurality of frame slits 310b through which the electrode lead 120 of the battery cell 100 passes. The bus bar frame 310 may further include at least one frame protrusion 310a for coupling with the fire-proof sheet assembly 400.

The bus bar frame 310 has a shape corresponding to an end portion and the other end portion of the module housing 200 in the longitudinal direction of the module housing 200 and is closely attached to the module housing 200. When the module housing 200 includes the fastening frame 225 as described above, the bus bar frame 310 is closely attached to the spark direction changing portion 200a and the fastening frame 225.

The bus bar 320 is located on an outer surface of the bus bar frame 310, and is coupled to the electrode lead 120 passing through the frame slit 310b, to electrically connect the plurality of battery cells 100. The bus bar 320 may include a bus bar slit 320b through which the electrode lead 120 passes. In this case, the bus bar slit 320b and the frame slit 310b may be formed at positions corresponding to each other.

Referring to FIGS. 5 through 11, the fire-proof sheet assembly 400 includes a fire-proof sheet 410. The fire-proof sheet assembly 400 may further include a sheet cover 420. The same number of fire-proof sheet assemblies 400 as the bus bar frame assemblies 300 may be provided.

The fire-proof sheet 410 may be a sheet formed of a mica material capable of withstanding high-temperature venting gas and sparks. The fire-proof sheet 410 includes a plurality of sheet slits 410b through which the electrode lead 120 passes.

Even when the bus bar frame 310 formed of a resin material is damaged due to high-temperature venting gas and sparks, the fire-proof sheet 410 may maintain its structure, and thus, positions of the plurality of electrode leads 120 respectively inserted into the plurality of sheet slits 410b may be maintained. Also, the fire-proof sheet 410 may allow high-temperature venting gas to be discharged to the outside through a gap between the sheet slit 410b and the electrode lead 120, and may minimize outward ejection of a high-temperature spark containing active material and aluminum particles. Also, even when the bus bar frame 310 formed of a resin material is damaged, the fire-proof sheet 410 may prevent oxygen from being easily introduced from the outside into the battery module 10.

Accordingly, the fire-proof sheet 410 may minimize the risk of a fire around the bus bar frame 310 even when an event occurs in the battery module 10, and even when a fire occurs around the bus bar frame 310, the fire-proof sheet 410 may delay the spread of the fire into the battery module 10. Also, the fire-proof sheet 410 may prevent an event from spreading due to a short circuit between the battery cells 100 caused by damage to the bus bar frame 310.

The sheet cover 420 completely surrounds the fire-proof sheet 410 so that the fire-proof sheet 410 is not exposed to the outside. This is because the fire-proof sheet 410 formed of a mica material has hygroscopicity, and thus, when the fire-proof sheet 410 formed of a mica material is exposed to external air of the sheet cover 420, the fire-proof sheet 410 may absorb moisture, thereby degrading insulation performance.

The sheet cover 420 may be a resin injection molding product, and in this case, the fire-proof sheet 410 may be located in the sheet cover 420 through insert injection molding. The sheet cover 420 includes a plurality of cover slits 420b through which the electrode lead 120 passes. The cover slit 420b has a shape whose width decreases toward the bus bar frame assembly 300.

This is to, when the sheet cover 420 formed of a resin injection molding product is melted by high-temperature venting gas and sparks, rapidly close the cover slit 420b and block the inflow of air from the outside of the battery module 10. As such, when the inflow of external air is rapidly blocked, the supply of oxygen into the battery module 10 may be blocked, and thus a fire may be prevented from spreading into the battery module 10.

The cover slit 420b, the sheet slit 410b, and the frame slit 310b are formed at positions corresponding to one another.

When the bus bar frame 310 includes the frame protrusion 310a, the fire-proof sheet 410 and the sheet cover 420 respectively include at least one sheet hole 410a and cover hole 420a formed to have positions and shapes corresponding to the frame protrusion 310a for fastening to the bus bar frame 310.

As described above, the battery pack 1 according to an embodiment of the present disclosure may prevent a fire from occurring in the battery pack 1 due to the filter provided in the duct cover 40 when an event occurs in the battery pack 1. Also, the battery pack 1 according to an embodiment of the present disclosure may prevent an event from spreading due to the spark direction changing portion 220a and/or the fire-proof sheet assembly 400 provided in the battery module 10.

An energy storage system (ESS) according to an embodiment of the present disclosure includes the battery pack 1 according to an embodiment of the present disclosure.

A vehicle according to an embodiment of the present disclosure includes the battery pack 1 according to an embodiment of the present disclosure. The vehicle may be, for example, an electric vehicle driven by power supplied from the battery pack 1.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

## Claims

1. A battery pack (1) comprising:
a sub-pack comprising a plurality of battery modules (10) that are located adjacent to one another in a longitudinal direction of the battery pack (1);
a duct (30) coupled to a side of the sub-pack in a width direction of the sub-pack that is perpendicular to the longitudinal direction of the battery pack (1); and
a duct cover (40) covering a duct opening portion formed on a side of the duct (30) in a longitudinal direction of the duct (30), the duct cover (40) comprising a filter having a mesh structure,
wherein the duct (30) is spaced apart from a module opening portion (10a) formed on a side of the battery module (10) in a longitudinal direction of the battery module (10), to form a pack passage (P) between the battery module (10) and the duct (30), and
wherein the filter has filtration performance ranging from one wire every 1.27mm (20 meshes) to one wire every 0.25mm (100 meshes).

2. The battery pack (1) of claim 1, wherein, from among venting gas and a spark discharged from the battery module (10), the filter filters out electrode active material particles and metal particles contained in the spark.

3. The battery pack (1) of claim 1, wherein the battery module (10) comprises:
a cell stack in which a plurality of battery cells (100) are vertically stacked;
a module housing (200) in which the cell stack is accommodated; and
a bus bar frame assembly (300) covering a module opening portion formed on a side of the module housing (200) in a longitudinal direction of the module housing (200).

4. The battery pack (1) of claim 3, wherein the module housing (200) comprises:
a base plate (210) supporting the cell stack; and
a pair of side plates (220) covering both side portions of the cell stack.

5. The battery pack (1) of claim 4, wherein each of the pair of side plates (220) comprises a spark direction changing portion (220a) formed by bending an end portion of the side plate (220) in a longitudinal direction of the side plate (220) toward the cell stack.

6. The battery pack (1) of claim 3, wherein the battery module (10) further comprises a fire-proof sheet (410) located between the bus bar frame assembly (300) and the cell stack and comprising a plurality of sheet slits (410b) through which an electrode lead (120) of the battery cell (100) passes,
wherein the fire-proof sheet (410) is a mica sheet.

7. The battery pack (1) of claim 6, wherein the battery module (10) further comprises a sheet cover (420) comprising a plurality of cover slits (420b) through which the electrode lead (120) of the battery cell (100) passes and covering the fire-proof sheet (410).

8. The battery pack (1) of claim 7, wherein the sheet cover (420) completely covers the mica sheet so that the mica sheet is not exposed to external air.

9. The battery pack (1) of claim 7, wherein each of the plurality of cover slits (420b) has a shape whose width decreases toward the bus bar frame assembly (300).

10. An energy storage system (ESS) comprising the battery pack (1) according to any one of claims 1 through 9.

11. A vehicle comprising the battery pack (1) according to any one of claims 1 through 9.

## Patentansprüche

1. Batteriepack (1), umfassend:
ein Subpack, umfassend eine Vielzahl von Batteriemodulen (10), die in einer Längsrichtung des Batteriepacks (1) aneinander angrenzend angeordnet sind;
einen Kanal (30), der mit einer Seite des Subpacks in einer Breitenrichtung des Subpacks gekoppelt ist, die senkrecht zu der Längsrichtung des Batteriepacks (1) ist; und
eine Kanalabdeckung (40), die einen Kanalöffnungsabschnitt abdeckt, der an einer Seite des Kanals (30) in einer Längsrichtung des Kanals (30) gebildet ist, wobei die Kanalabdeckung (40) einen Filter umfasst, der eine Maschenstruktur aufweist,
wobei der Kanal (30) von einem Modulöffnungsabschnitt (10a) beabstandet ist, der an einer Seite des Batteriemoduls (10) in einer Längsrichtung des Batteriemoduls (10) gebildet ist, um einen Packdurchgang (P) zwischen dem Batteriemodul (10) und dem Kanal (30) zu bilden, und
wobei der Filter eine Filtrationsleistung aufweist, die von einem Draht je 1,27 mm (20 Maschen) bis zu einem Draht je 0,25 mm (100 Maschen) reicht.

2. Batteriepack (1) nach Anspruch 1, wobei der Filter aus Entlüftungsgas und einem aus dem Batteriemodul (10) austretenden Funken die im Funken enthaltenen Elektrodenaktivmaterialpartikel und Metallpartikel herausfiltert.

3. Batteriepack (1) nach Anspruch 1, wobei das Batteriemodul (10) umfasst:
einen Zellstapel, bei dem eine Vielzahl von Batteriezellen (100) vertikal gestapelt sind;
ein Modulgehäuse (200), in dem der Zellstapel aufgenommen ist; und
eine Sammelschienenrahmenanordnung (300), die einen Modulöffnungsabschnitt abdeckt, der an einer Seite des Modulgehäuses (200) in einer Längsrichtung des Modulgehäuses (200) gebildet ist.

4. Batteriepack (1) nach Anspruch 3, wobei das Modulgehäuse (200) umfasst:
eine Bodenplatte (210), die den Zellstapel stützt; und
ein Paar von Seitenplatten (220), die beide Seitenabschnitte des Zellstapels abdecken.

5. Batteriepack (1) nach Anspruch 4, wobei jede der beiden Seitenplatten (220) einen Funkenumlenkabschnitt (220a) umfasst, der durch Biegen eines Endabschnitts der Seitenplatte (220) in einer Längsrichtung der Seitenplatte (220) zu dem Zellstapel hin gebildet ist.

6. Batteriepack (1) nach Anspruch 3, wobei das Batteriemodul (10) weiter eine Brandschutzfolie (410) umfasst, die zwischen der Sammelschienenrahmenanordnung (300) und dem Zellstapel angeordnet ist und eine Vielzahl von Folienschlitzen (410b) umfasst, durch die eine Elektrodenleitung (120) der Batteriezelle (100) hindurchgeht,
wobei es sich bei der Brandschutzfolie (410) um eine Glimmerfolie handelt.

7. Batteriepack (1) nach Anspruch 6, wobei das Batteriemodul (10) weiter eine Folienabdeckung (420) umfasst, die eine Vielzahl von Abdeckungsschlitzen (420b) umfasst, durch die die Elektrodenleitung (120) der Batteriezelle (100) hindurchgeht, und die die Brandschutzfolie (410) abdeckt.

8. Batteriepack (1) nach Anspruch 7, wobei die Folienabdeckung (420) die Glimmerfolie vollständig abdeckt, sodass die Glimmerfolie keiner Außenluft ausgesetzt ist.

9. Batteriepack (1) nach Anspruch 7, wobei jeder der Vielzahl von Abdeckungsschlitzen (420b) eine Form aufweist, deren Breite sich zur Sammelschienenrahmenanordnung (300) hin verringert.

10. Energiespeichersystem (ESS), umfassend das Batteriepack (1) nach einem der Ansprüche 1 bis 9.

11. Fahrzeug, umfassend das Batteriepack (1) nach einem der Ansprüche 1 bis 9.

## Revendications

1. Bloc-batterie (1) comprenant :
un sous-bloc comprenant une pluralité de modules (10) de batterie qui sont situés de manière adjacente les uns aux autres dans une direction longitudinale du bloc-batterie (1) ;
un conduit (30) couplé à un côté du sous-bloc dans une direction de largeur du sous-bloc qui est perpendiculaire à la direction longitudinale du bloc-batterie (1) ; et
un couvercle (40) de conduit recouvrant une partie d'ouverture de conduit formée sur un côté du conduit (30) dans une direction longitudinale du conduit (30), le couvercle (40) de conduit comprenant un filtre présentant une structure maillée,
dans lequel le conduit (30) est espacé d'une partie (10a) d'ouverture de module formée sur un côté du module (10) de batterie dans une direction longitudinale du module (10) de batterie,
pour former un passage (P) de bloc entre le module (10) de batterie et le conduit (30), et
dans lequel le filtre présente une performance de filtration allant de un fil tous les 1,27 mm (20 mailles) à un fil tous les 0,25 mm (100 mailles).

2. Bloc-batterie (1) selon la revendication 1, dans lequel, parmi le gaz de ventilation et une étincelle évacués depuis le module (10) de batterie, le filtre filtre les particules de matériau actif d'électrode et les particules de métal contenues dans l'étincelle.

3. Bloc-batterie (1) selon la revendication 1, dans lequel le module (10) de batterie comprend :
un empilement de cellules dans lequel une pluralité de cellules (100) de batterie sont empilées verticalement ;
un boîtier (200) de module dans lequel l'empilement de cellules est logé ; et
un ensemble (300) cadre de barre omnibus recouvrant une partie d'ouverture de module formée sur un côté du boîtier (200) de module dans une direction longitudinale du boîtier (200) de module.

4. Bloc-batterie (1) selon la revendication 3, dans lequel le boîtier (200) de module comprend :
une plaque (210) de base supportant l'empilement de cellules ; et
une paire de plaques (220) latérales recouvrant les deux parties latérales de l'empilement de cellules.

5. Bloc-batterie (1) selon la revendication 4, dans lequel chacune de la paire de plaques (220) latérales comprend une partie (220a) de changement de direction d'étincelle formée en pliant une partie d'extrémité de la plaque (220) latérale dans une direction longitudinale de la plaque (220) latérale vers l'empilement de cellules.

6. Bloc-batterie (1) selon la revendication 3, dans lequel le module (10) de batterie comprend en outre une feuille (410) ignifuge située entre l'ensemble (300) cadre de barre omnibus et l'empilement de cellules et comprenant une pluralité de fentes (410b) de feuille à travers lesquelles passe un fil (120) d'électrode de la cellule (100) de batterie,
dans lequel la feuille (410) ignifuge est une feuille de mica.

7. Bloc-batterie (1) selon la revendication 6, dans lequel le module (10) de batterie comprend en outre un recouvrement (420) de feuille comprenant une pluralité de fentes (420b) de recouvrement à travers lesquelles passe le fil (120) d'électrode de la cellule (100) de batterie et recouvrant la feuille (410) ignifuge.

8. Bloc-batterie (1) selon la revendication 7, dans lequel le recouvrement (420) de feuille recouvre complètement la feuille de mica de sorte que la feuille de mica ne soit pas exposée à l'air extérieur.

9. Bloc-batterie (1) selon la revendication 7, dans lequel chacune de la pluralité de fentes (420b) de recouvrement présente une forme dont la largeur diminue vers l'ensemble (300) cadre de barre omnibus.

10. Système de stockage d'énergie (ESS) comprenant le bloc-batterie (1) selon l'une quelconque des revendications 1 à 9.

11. Véhicule comprenant le bloc-batterie (1) selon l'une quelconque des revendications 1 à 9.
